Europäisches Patentamt

European Patent Office

Office européen des brevets

(11) Veröffentlichungsnummer: **0 343 265 B1**

# (12) EUROPÄISCHE PATENTSCHRIFT

(45) Veröffentlichungstag der Patentschrift: **26.02.92**

(51) Int. Cl.[5]: **G01M 1/04**

(21) Anmeldenummer: **88108247.3**

(22) Anmeldetag: **24.05.88**

(54) Verfahren zur Herstellung einer Abstützung für eine Auswuchtmaschine.

(43) Veröffentlichungstag der Anmeldung:
**29.11.89 Patentblatt 89/48**

(45) Bekanntmachung des Hinweises auf die
Patenterteilung:
**26.02.92 Patentblatt 92/09**

(84) Benannte Vertragsstaaten:
**DE ES FR GB IT NL**

(56) Entgegenhaltungen:
**EP-A- 0 010 790**
**DE-U- 7 734 319**
**GB-A- 2 130 385**

(73) Patentinhaber: **Schenck-Auto-Service-Geräte GmbH**
**Landwehrstrasse 63 Postfach 4129**
**W-6100 Darmstadt(DE)**

(72) Erfinder: **Maus, Otfrid, Ing.-Grad.**
**Im Fiedlersee 34**
**W-6100 Darmstadt(DE)**

(74) Vertreter: **Dallhammer, Herbert, Dipl.-Ing.**
**c/o Schenck-Auto-Service-Geräte GmbH Patentabteilung Postfach 4129 Landwehrstrasse 63**
**W-6100 Darmstadt(DE)**

EP 0 343 265 B1

# Beschreibung

Die Erfindung betrifft ein Verfahren zur Herstellung einer Abstützung einer Lagerung für einen auszuwuchtenden Körper in einer Auswuchtmaschine zur Bestimmung einer Unwuchtwirkung in zwei Meßebenen, wobei die Lagerung an einer geschlitzten Platte so angeordnet ist, daß die Unwuchtschwingungen über Stege weiterleitbar sind und eine nach dem Verfahren hergestellte Abstützung mit einer das in zwei Ebenen auszuwuchtende Bauteil aufnehmenden Hilfswelle sowie Schwingkraftaufnehmern und einem Winkellagengeber zur Bestimmung des auf die einzelnen Ebenen entfallenden Unwuchtanteils nach Lage und Größe, wobei die Abstützung Schlitze trägt, die im Zusammenwirken mit den Schwinkraftaufnehmern und dem Winkellagengeber erlauben, den je Ebene entfallenden Unwuchtanteil zu bestimmen.

Zur Auswuchtung rotierender Bauteile ohne eigene Welle wie Turbinenräder, Zahnräder, Fahrzeugräder und Schleifscheiben, wobei die Aufzählung der verschiedenen Bauteile nicht einschränkend zu werten ist, ist es erforderlich, die Auswuchtmaschine mit einer Hilfswelle zu versehen, auf der diese Bauteile für den Vorgang des Auswuchtens befestigbar sind. Hierbei ist es gleichgültig, ob die Hilfswelle sich in vertikaler oder horizontaler Lage erstreckt, wesentlich ist es bei derartigen Bauteilen, diese wenn möglich in einer Lage auf Unwucht zu untersuchen, in der sie später im zusammengebauten Zustand mit anderen Bauteilen zusammen in einer dann kompletten Maschine angeordnet sind oder einfach in der Unwucht korrigiert werden können. Beispielsweise kann so für Schleifscheiben und Kraftfahrzeugräder eine horizontale Anordnung der Hilfswelle von Vorteil sein, wenn derartige Auswuchtmaschinen nicht für die Fertigung der Maschinen, im vorliegenden Falle Schleifmaschinen oder Kraftfahrzeuge, eingesetzt werden, sondern zum Auswuchten derartiger rotierender Körper nach einer gewissen Laufzeit, beispielsweise der Kraftfahrzeugräder; oder Abnutzung, beispielsweise von Schleifscheiben.

Um eine sichere Lagerung der Hilfswelle zu erhalten, wird diese Welle an zwei Lagerstellen gelagert, wobei das den auszuwuchtenden Körper aufnehmende Ende der Hilfswelle über eine Lagerung hinweg ragt, so daß hierdurch eine sogenannte fliegende Lagerung des auszuwuchtenden Bauteils möglich wird.

Bei der Vermessung auf Unwucht wird nunmehr das Bauteil, das fest auf der Hilfswelle verbunden wurde, in Rotation gebracht und die Wirkungen der Massenkräfte der im Bauteil vorhandenen Unwucht werden durch Schwingungsumformer, die in den Lagerebenen der Hilfswelle angeordnet sind, aufgenommen und mit Hilfe eines Winkellagengebers für jede Ebene getrennt angezeigt, so daß anschließend für jede Ebene der notwendige Unwuchtausgleich in der entsprechenden Winkellage und mit dem entsprechenden Gewicht durchgeführt werden kann. Als Schwingungsumformer haben sich neben Schwingwegaufnehmern auch Schwingkraftaufnehmer wie Piezokristalle oder Dehnmeßstreifen als besonders geeignet erwiesen.

Zur Vermeidung von Meßfehlern, die durch die Lagerung hervorgerufen werden, ist es erforderlich, derartige Hilfswellen oder Spindeln hochgenau zu lagern, was mit einem sehr großen Abstimmungsaufwand verbunden ist. Insbesondere bei Spindeln, die horizontal gelagert sind und die ein fliegend gelagertes, auszuwuchtendes Bauteil aufnehmen sollen, ist der Einfluß des überhängenden Gewichts bei Meßfehlern, die von falscher Lagerung herrühren, nicht zu unterschätzen. Demgemäß müssen des öfteren Justierläufe durchgeführt werden, um festzustellen, ob derartige Auswuchtmaschinen noch einsetzbar sind, beispielsweise an Tankstellen und Reparaturbetrieben mit ihrem teilweise doch sehr rauhen Betrieb. Darüber hinaus werden derartige Lagerungen mit dem Gehäuse der Auswuchtmaschine, das beispielsweise den Antriebsmotor und die Auswerteelektronik beinhaltet, einzeln verschraubt, d. h. jede Lagerung der Spindel für sich. Auch hierdurch treten Meßfehler zufolge verschiedener Vorspannung zwischen Lagerung und Gehäuse in Abhängigkeit des Schraubenanzugsmomentes auf. Es ist auch nicht auszuschließen, daß derartige Schraubverbindungen im Laufe der Zeit sich etwas lockern, was zu einer Beeinflussung in der Meßgenauigkeit führt.

Durch die EP-A 10 790 ist eine Auswuchtmaschine mit Lagerständer, einer Aufnahme für den auszuwuchtenden Rotationskörper zur Bestimmung der Unwucht in zwei Ebenen und Schwingungsumformern bekanntgeworden. Bei der bekannten Auswuchtmaschine ist die Wuchtkörperlagerung an einer geschlitzten Platte so angeordnet, daß die Schwingungen über die Stege weiterleitbar sind. Als Kraftmeßelemente können hierbei Piezoelemente oder Dehnungsmeßstreifen verwendet werden. Dabei können gegossene und geschweißte Platten als einstückige geschlitzte Platten hergestellt werden. Überdies können auch plattenförmige geschlitzte Gebilde, die Vertiefungen und Erhöhungen aufweisen und einstückig mit dem geschlitzten Gebilde hergestellt wurden, verwendet werden. Dabei kann die Platte in einen Rahmen und ein Mittelteil aufgetrennt werden, wobei zwei federnde Stegpaare gebildet werden.

Durch die DE-U-77 34 319 ist ein Gerät zum Auswuchten von Rotationselementen insbesondere von Propellern oder Hubschrauberflügeln im Modellbau bekannt geworden, bei dem die Elemente wie winklige Träger und die die Spanneinrichtung bildenden Bauelemente aus beliebigen Materialien, also nicht nur aus Blech, bestehen können; vorteilhaft ist auch eine Ausbildung aus geeigneten Kunststoffen. In diesem Falle werden die Träger beispielsweise auch einstückig hergestellt und miteinander verbunden. Derart hergestellte Lagerungen für auszuwuchtende Rotoren besitzen im Bereich der gegenseitigen Verbindung ihre Auflagerflächen mit einer Unterlage. In soweit sind derartige Geräte nicht geeignet im Zusammenwirken mit der EP-A-10 790 eine fehlerfreie Übertragung der Meßwerte auf die Meßaufnehmer zu gewährleisten.

Ausgehend hiervon liegt der vorliegenden Erfingung die Aufgabe zugrunde, ein besonders wirtschaftliches Herstellungsverfahren für eine Abstützung einer Lagerung für auszuwuchtende Bauteile vorzuschlagen, bei der die von der Abstützung der Lagerung ausgehenden Fehlermöglichkeiten beseitigt sind sowie eine nach diesem Verfahren hergestellte störsichere aber einfache Abstützung einer Lagerung. Diese Aufgabe wird durch die kennzeichnenden Merkmale des Anspruchs 1 durch Herstellung eines geschlossenen einstückigen Kastenprofils erreicht, wobei es gleichwirkend ist, ob die Einstückigkeit durch Biegen einer Platte zu einem Profil und anschließendem Einschweißen eines Stützträgers geschieht, der parallel zum Steg des U-Profils verläuft und der die beiden schwingfähigen Bereiche der Schenkel des U-Profils verbindet oder ob die Einstückigkeit durch Anschweißen von Blechteilen an eine Platte ein U-Profil erzeugt wird, welches dann durch den Stützträger zu einem einstückigen Kastenprofil verschweißt wird. Durch dieses erfindungsgemäße Verfahren ist zum einen die Gewähr dafür gegeben, daß die beiden schwingfähigen Bereiche der Schenkel exakt parallel zueinander verlaufen, daß beide gleichartig mit dem Steg des U-Profils verbunden sind und gleichartig mit dem Stützträger. Durch die Einstückigkeit sind zwangsläufig alle Fehler, die durch die Anordnung von zwei getrennten Abstützungen im Kraftfluß einer Spindel ausgehen, beseitigt.

Die in Anspruch 2 unter Schutz gestellte Abstützung mit einer das in zwei Ebenen auszuwuchtende Bauteil aufnehmenden Hilfswelle sowie Schwingkraftaufnehmern und einem Winkellagengeber zur Bestimmung des auf die einzelne Ebene entfallenden Unwuchtanteils nach Lage und Größe zeichnet sich durch die kennzeichnenden Merkmale dieses Anspruchs aus. Durch die erfindungsgemäße Anordnung des Antriebsendes der Hilfswelle mit nur einem schwingfähigen Schenkelbereich des einstückigen kastenförmigen Profils wird zum einen eine beachtliche Gewichtseinsparung in Bezug auf das Hilfswellengewicht erreicht, da nunmehr die Hilfswelle für die Aufnahme auszuwuchtender Bauteile an dem einen ausgewählten Schenkel endet und sich mit ihrem aufnehmenden Teil von dem einstückigen Kastenprofil wegerstreckt und zum anderen eine einfache und sichere Anordnung der Schwingkraftaufnehmer zwischen Stützträger und dem Steg, wenn Piezokristalle als Schwingkraftaufnehmer verwendet werden, oder einem einfachen Verbinden der Schwingkraftaufnehmer mit den schwingfähigen Teilen der Schenkel, wenn es sich um den Meßstreifen als Schwingkraftaufnehmer handelt, ohne daß hierbei die Hilfswelle den Raum zwischen den schwingfähigen Schenkelteilen beeinflußt. Dabei ist es von besonderem Vorteil, wenn der eingeschweißte Stützträger U-förigen Querschnitt hat, wenn die Hilfswelle durch Verschraubung mit dem schwingfähigen Teil eines Schenkels verbunden wird.

Im Falle des Verschweißes des Antriebsendes der Hilfswelle mit dem schwingfähigen Schenkelbereich eines Schenkels, wie in Anspruch 3 unter Schutz gestellt, kann der Stützträger selbst, der zwischen den beiden schwingfähigen Schenkelbereichen eingeschweißt ist, auch andere Konturen aufweisen, so kann der Stützträger als Stab, Rohr beliebiger Querschnittsform oder Doppel-T-Träger ausgebildet sein.

In noch weiterer Ausgestaltung des Erfindungsgegenstandes wird vorgeschlagen, daß sich die Hilfswelle horizontal von dem einstückigen kastenförmigen Profil weg erstreckt. Diese Ausführungsform der horizontal verlaufenden Hilfswelle ist vor allem bei Auswuchtmaschinen von Vorteil, die in Reparaturbetrieben verwendet werden, und wobei das zu untersuchende Bauteil im eingebauten Zustand um eine horizontale Drehachse rotiert.

Die in Anspruch 5 unter Schutz gestellte Anordnung der Schwingkraftaufnehmer mit gleichem Abstand zu der parallel zu den Schenkeln verlaufenden Symmetrielinie der Stegplatte stellt fertigungstechnisch eine wesentliche Vereinfachung dar, da bereits bei der Herstellung des geschlossenen Kastenprofils Markierungen für die aufzunehmenden Schwingkraftaufnehmer mit angebracht werden können, ohne daß später ein aufwendiges Vermessen des Steges stattfinden muß.

Die in Anspruch 6 unter Schutz gestellte Anordnung von Bohrungen in der Stegplatte zur Verbindung mit einem Gehäuse einer Auswuchtmaschine schwächt zum einen die Steifigkeit des einstückigen Kastenprofils nicht und zeigt zum anderen einen Weg auf, wie in einfachster Weise eine derartige Stegplatte mit einem vorhandenen Gehäuse einer Auswuchtmaschine verbunden werden kann ohne daß etwa beim ungleichmäßigen Festziehen der Schrauben bzw. Lösen der Schrauben im Laufe der Zeit die Auswuchtgenauigkeit der Auswuchtmaschine negativ beeinflußt würde.

Die in Anspruch 7 unter Schutz gestellte erfinderische Ausgestaltung offenbart, daß bei horizontal verlaufender Hilfswelle die Stegplatte als Auswuchtmaschinengehäuse ausbildbar ist, und zwar durch Anordnung von Antriebsmotor und Auswerteeinheit innerhalb des U-Profils oder auch mit einem Maschinengehäuse verschweißt oder verschraubt werden kann, in welchem dann die Antriebs-und Auswerteeinheiten untergebracht sind. Diese Kompaktbauweise ist von besonderem Vorteil, wenn beispielsweise von einem Maschinengehäuse, in dem ein Antriebsmotor und Auswerteeinheiten untergebracht sind, mehrere Prüfeinrichtungen versorgt werden.

Durch die Prüfeinrichtung wird eine Abstützung für eine Lagerung auszuwuchtender Bauteile geschaffen, bei der durch die einstückige Ausgestaltung der Abstützung eine Beeinflussung der Meßergebnisse ausgehend von der Abstützung ausgeschlossen ist. Die Abstützung läßt sich bereits allein als Auswuchtmaschine verwenden, wenn innerhalb des U-Profils Antriebsmotor und Auswerteeinrichtung untergebracht werden können; dies ist beispeilsweise bei der Auswuchtung von Schleifscheiben möglich. Andererseits kann die Abstützung mit einem Gestell oder einem Auswuchtmaschinengehäuse lösbar oder unlösbar verbunden werden, und es kann die an der Abstützung angeordnete Spindel lösbar mit der Abstützung verbunden sein, was sich dann bewährt, wenn verschiedene Spindeln mit einer einzigen Abstützung zum Auswuchten rotierender Bauteile zusammenwirken oder es kann die Spindel mit der Abstützung verschweißt werden, wenn nur eine bestimmte Art von auszuwuchtenden Bauteilen vermessen und ausgeglichen werden soll. Darüber hinaus ist die erfindungsgemäße Abstützung mit dem Steg des U-Profils mit horizontal oder vertikal verlaufenden Unterlagen verbindbar, so daß die an der Unterlage befestigte Spindel einen horizontalen oder vertikalen Achsenverlauf aufweisen kann.

In der nachfolgenden Zeichnung wird die Erfindung anhand eines Ausführungsbeispiels näher erläutert:

Es zeigen:

Fig. 1:  eine räumliche Darstellung einer Abstützung und

Fig. 2:  einen Längsschnitt durch eine Abstützung mit an der Abstützung angeordneter, antreibbarer Spindel

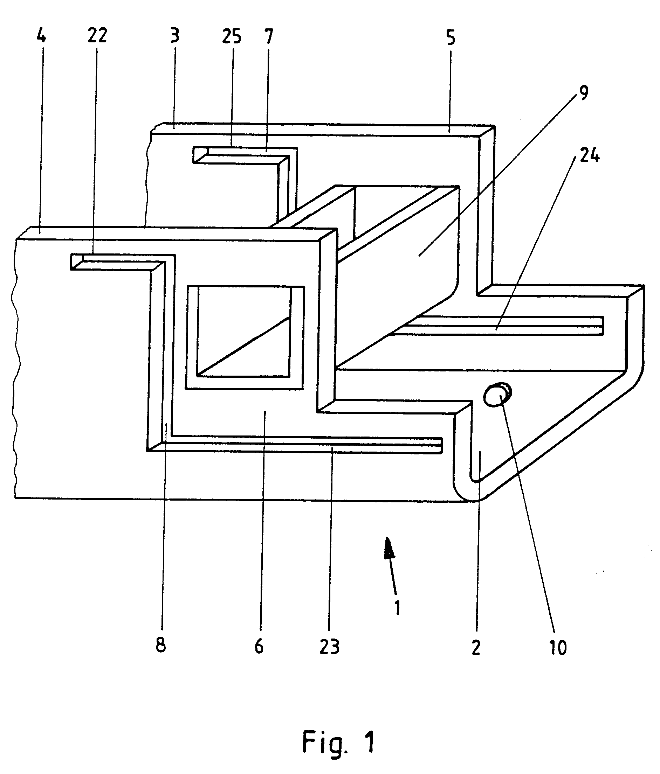

Gleiche Bauteile in den Zeichnungen werden mit der selben Bezugsziffer versehen. Anhand der Fig. 1 wird das Herstellungsverfahren näher erläutert. Eine Abstützung 1 wird gemäß Ausführungsbeispiel aus einer Blechplatte durch Abkanten zweier parallel zueinander verlaufenden Kantenbereiche zu einem U-Profil umgestaltet, welches aus einer Stegplatte 2 und aus parallel zueinander verlaufenden Schenkeln 3, 4 besteht, die schwingfähige Bereiche 5, 6 enthalten. Die schwingfähigen Bereiche 5, 6 werden durch Ausstanzen von Winkelschlitzen 7, 8 erzeugt.

Durch Einschweißen eines Stützträgers 9, der im Ausführungsbeispiel nach Fig. 1 U-Form besitzt, zwischen die beiden schwingfähigen Bereiche 5, 6 wird ein starres einstückiges Kastenprofil erzeugt, welches zufolge der Winkelschlitze 7, 8 in der Lage ist, bei Auftreten von Unwuchtschwingungen diese an Schwingkraftaufnehmer weiterzugeben. Eine in Fig. 1 nicht dargestellte Spindel wird mit dem schwingfähigen Bereich 6 des Schenkels 4 verbunden, und zwar durch Schrauben oder Schweißen.

In Fig. 1 ist in der Stegplatte 2 eine Durchgangsloch 10 dargestellt, mit dem die komplette Abstützung 1 mittels Schrauben mit einer beliebigen Unterlage verbunden werden kann.

Anhand der räumlichen Darstellung wird deutlich, daß zufolge der Einstückigkeit keine Fremdschwingungen von der Abstützung ein- und ausgehen können, die das Meßergebnis fälschen können.

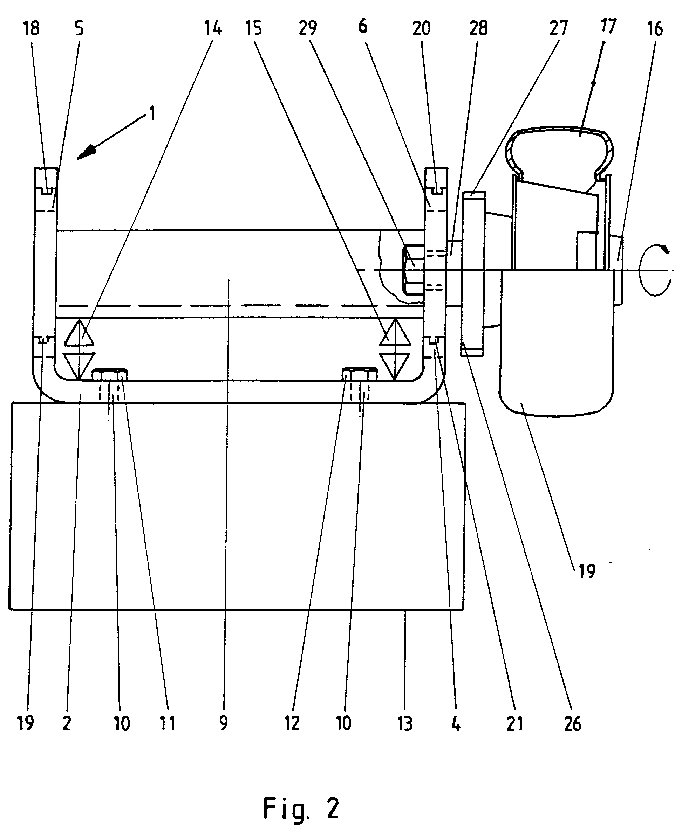

Fig. 2 zeigt schematische die Verschraubung der Abstützung 1 über Schrauben 11, 12, die durch die Durchgangslöcher 10 geführt sind mit einem Maschinenbett 13. Anstelle der Verschraubung kann jedoch auch ein Verschweißen treten, wenn die Abstützung 1 mit dem Maschinenbett 13 verbunden ist.

Zwischen der Stegplatte 2 und dem Stützträger 9 sind Schwingkraftaufnehmer 14, 15 in Ausführungsbeispiel als Piezokristalle eingespannt. Zufolge der schwingenden Abstützung einer Spindel 16 als Lagerung für ein auszuwuchtendes Bauteil, im vorliegenden Falle ein Kraftfahrzeugrad 17, werden die durch Unwucht hervorgerufenen Schwingungen auf die einstückige Abstützung 1 übertragen und bewirken zufolge der schwingfähigen Bereiche 5, 6 eine Schwingbewegung des Stützträgers 9, die von den eingespannten Piezokristallen 14, 15 durch Spannungsänderung in Verbindung mit einem nicht dargestellten Winkellagengeber über die im Kraftfahrzeugrad 17 in zwei Ebenen vorhandenen auszugleichenden Kräfte nach Größe und Richtung un die Wirkungen der Unwucht auszugleichen.

Anstelle der Piezokristalle 14, 15 können Dehnmeßstreifen 18, 19, 20, 21 an waagerechten Schenkeln 22, 23, 24, 25 (vgl. Fig. 1) der Winkelschlitze 7, 8 angeordnet sein, um ebenfalls die Schwingungsinformation in elektrische Meßwerte zur Weiterverarbeitung aufzunehmen.

Wie schematische dargestellt, besitzt die Spindel 16 ein Antriebsende 26, um das ein Zahnriehmen 27 als Kraftübertragungsglied, von einem nicht dargestellten Motor angetrieben, geschlungen ist. Das Antriebsende 26 besitzt einen Stützschaft 28, der mittels Halteschraube 29 mit dem schwingfähigen Bereich 6 des Schenkels 4 verbunden ist. Anstelle der Halteschraube 29 kann der Stützschaft 28 auch mit dem schwingfähigen Bereich 6 verschweißt sein, um eventuell auftretende Fehler zufolge unterschiedlicher Vorspannung der Halteschraube 29 völlig auszuschließen.

Damit stellt Fig. 2 schematisch eine einstückige Anordnung von Abstützung 1 und Spindel 16 dar.

**Patentansprüche**

1. Verfahren zur Herstellung einer Abstützung einer Lagerung für einen auszuwuchtenden Körper in einer Auswuchtmaschine zur Bestimmung einer Unwuchtwirkung in zwei Meßebenen, wobei die Lagerung an einer geschlitzten Platte so angeordnet ist, daß die Unwuchtschwingungen über Stege weiterleitbar sind, dadurch gekennzeichnet, daß aus einer ebenen Platte durch Biegen zweier parallel zueinander verlaufender Kantenbereiche in gleicher Richtung ein U-Profil (2, 3, 4) erzeugt wird, oder durch Anschweißen zweier Schenkel (3, 4) ein U-Profil (2, 3, 4) erzeugt wird, das in jedem der beiden parallel zueinander verlaufenden Schenkel (3, 4) des U-Profils zur Bildung des Schenkelbereichs (5, 6) Durchbrechungen (7) insbesondere durch Stanzen erzeugt werden und daß das U-Profil (2, 3, 4) zu einem geschlossenen Kastenprofil mittels Einschweißen eines parallel zur Stegplatte (2) des U-Profils (2, 3, 4) verlaufenden eigensteifen Stützträgers zwischen die beiden schwingfähigen Bereiche (5, 6) ergänzt wird.

2. Abstützung nach Anspruch 1, mit einer das in zwei Ebenen auszuwuchtende Bauteil (17) aufnehmenden Spindel (16) sowie Schwingkraftaufnehmern und einem Winkellagengeber zur Bestimmung des auf die einzelne Ebene entfallenden Unwuchtanteils nach Lage und Größe, wobei die Abstützung Schlitze trägt, die im Zusammenwirken mit den Schwingkraftaufnehmern und dem Winkellagengeber erlauben, den je Ebene entfallenden Unwuchtanteil zu bestimmen, dadurch gekennzeichnet, daß ein Stützschaft (28) der Spindel (16) mit dem einen durch Schlitze schwingfähigen Schenkelbereich (5 bzw. 6) eines Schenkels (3 bzw. 4) eines einstückigen kastenförmigen Profils verbunden ist, daß sich die Spindel (16) von dem einstückigen Kastenprofil (2, 5, 9, 6) wegerstreckt, daß das einstückige Kastenprofil aus einer Stegplatte (2) links und rechts daran anschließend je einem Schenkel (3, 4) mit dem durch Schlitze schwingfähigen Bereich (5, 6) und einem die schwingfähigen Bereiche verbindenden Stützträger (9) besteht und daß die Schwingkraftaufnehmer (14, 15) zwischen Stützträger (9) und Stegplatte (2) eingespannt sind oder daß die Schwingkraftaufnehmer (18, 19, 20, 21) mit den durch Schlitze schwingfähigen Schenkeln (22, 23, 24,25) verbunden sind.

3. Abstützung nach Anspruch 2, dadurch gekennzeichnet, daß der Stützschaft (28) der Spindel (16) mit einem schwingfähigen Schenkelbereich (5 bzw. 6) eines Schenkels (3 bzw. 4) verschweißt ist.

4. Abstützung nach einem der vorhergehenden Ansprüche, dadurch gekennzeichnet, daß sich die Spindel (16) horizontal von dem einstückigen kastenförmigen Profil wegerstreckt.

5. Abstützung nach einem der vorhergehenden Ansprüche, dadurch gekennzeichnet, daß die Schwingkraftaufnehmer (14, 15) zu der parallel zu den Schenkeln verlaufenden Symmetrielinie der Stegplatte (2) gleichen Abstand besitzen.

6. Abstützung nach einem der vorhergehenden Ansprüche, dadurch gekennzeichnet, daß die Stegplatte (2) Bohrungen (10) zur Verbindung mit einem Gehäuse oder Fundament (13) einer Auswuchtmaschine besitzt.

7. Abstützung nach einem der vorhergehenden Ansprüche 2 bis 5, dadurch gekennzeichnet, daß die Stegplatte (2) bei horizontal verlaufender Spindel (16) gleichzeitig als Auswuchtmaschinengehäuse ausgebildet ist oder mit einem Maschinengehäuse (13) verschraubt oder verschweißt ist.

**Claims**

1. A method of manufacturing a support (1) for a bearing for a body to be balanced in a balancing machine for determining an unbalance action in two measurement planes, in which the bearing is arranged on a slotted plate so that the unbalance vibrations can be transmitted via stems, **characterised in that** a U-profile (2,3,4) is produced from a flat plate by bending in the same direction two edge regions which run parallel to each other, or by welding two arms (3,4) a U-profile (2,3,4) is produced, that in each of the two parallel arms (3,4) of the U-profile, openings (7) are produced more particularly by stamping, in order to form the arm region (5,6) and that the U-profile (2,3,4) is supplemented to form an enclosed box section by means of welding in a support carrier which is inherently rigid and runs parallel to the web plate (2) of the U-profile (2,3,4), between the two regions (5,6) which can vibrate.

2. A support according to claim 1, having a spindle (16) receiving the component (17) to be balanced in two planes and having vibration force sensors and an angular position sensor for determining the unbalance component dropping into the individual plane according to position and size, in which the support carries slits which in cooperation with the vibration force sensors and the angular position sensor make it possible to determine the unbalance component dropping in each plane, **characterised in that** a support shaft (28) of the spindle (16) is connected to one arm region (5,6) which is capable of vibration due to slits, of an arm (3 or 4) of a one-piece box section, that the spindle (16) extends away from the one-piece box section (2,5,9,6), that the one-piece box section consists of a web plate (2), adjoining this to the left and right a respective arm (3,4) having the region (5,6) capable of vibration due to slits, and a support carrier (9) connecting the regions which are capable of vibration and that the vibration force sensors (14,15) are held between the support carrier (9) and the web plate (2) or that the vibration force sensors (18,19,20,21) are connected to the arms (22,23,24,25) which are capable of vibration due to slits.

3. A support according to claim 2, **characterised in that** the support shaft (28) of the spindle (16) is welded to an arm region (5 or 6), which is capable of vibration, of an arm (3 or 4).

4. A support according to any one of the preceding claims, **characterised in that** the spindle (16) extends away horizontally from the one-piece box section.

5. A support according to any one of the preceding claims **characterised in that** the vibration force sensors (14, 15) have the same spacing from the symmetry line of the web plate (2) which runs parallel to the arms.

6. A support according to any one of the preceding claims, **characterised in that** the web plate (2) has bores (10) for connecting to a casing or base (13) of a balancing machine.

7. A support according to any one of the preceding claims 2 to 5, **characterised in that** with a horizontally running spindle (16) the web plate (2) is formed at the same time as a balancing machine casing or is screwed or welded to a machine casing (13).

**Revendications**

1. Procédé de fabrication d'un support d'un montage destiné à un corps à équilibrer, dans une machine à équilibrer, pour déterminer un effet de balourd dans deux plans de mesure, le montage étant disposé sur une plaque fendue, de telle façon que les vibrations de déséquilibrage soient susceptible d'être transmises par des montants, caractérisé en ce qu'à partir d'une plaque plane, par pliage dans la même direction de deux zones d'arêtes parallèles entre elles, on produit un profilé en U (2,3,4), ou, par soudage de deux ailes (3,4), on produit un profilé en U (2,3,4), des passages (7) étant produits, en particulier par estampage, dans chacune des deux ailes (3,4) parallèles du profilé en U, en vue de former la zone d'aile (5,6), et en ce que le profilé en U (2,3,4) est complété pour former un profilé en caisson fermé, par soudure, entre les deux zones (5,6) sujettes aux vibrations, d'un support d'appui à rigidité propre, qui s'étend parallèlement à la plaque d'âme (2) du profilé en U (2,3,4).

2. Support selon la revendication 1, avec une broche (16) recevant l'élément de construction (17) à équilibrer et placé dans deux plans, ainsi que des capteurs de vibration et un capteur de position angulaire, pour déterminer la position et l'ampleur de la partie du balourd se déployant dans chaque plan, le support étant muni de fentes qui permettent, en coopération avec les capteurs de vibration et le capteur de position angulaire, de déterminer la proportion de balourd se déployant dans chaque plan, caractérisé en ce qu'un arbre d'appui (28) de la broche (16) est relié à une zone d'aile (5, respectivement 6), susceptible de vibrer grâce aux fentes, d'une aile (3, respectivement 4), d'un profilé en caisson monobloc, en ce que la boche (16) s'étend plus avant que le profilé en caisson (2,5,9,6), en ce que le profilé en caisson monobloc est composé d'une plaque d'âme (2) à laquelle à gauche et à droite se rattachent respectivement une aile (3,4) comportant la zone (5,6) susceptible de vibrer grâce aux fentes et d'une poutre-support (9), qui relie les zones (5,6) susceptibles de vibrer, et en ce que les capteurs de vibration (14,15) sont enserrés entre la poutre-support (9) et la plaque d'âme (2), ou en ce que les capteurs de vibration (18,19,20,21) sont reliés aux ailes (22,23,24,25) susceptibles de vibrer grâce aux fentes.

3. Support selon la revendication 2, caractérisé en ce que l'arbre d'appui (28) de la broche (16) est soudé à une zone d'aile (5, respectivement 6) susceptible de vibrer d'une aile (3, respectivement 4).

4. Support selon l'une des revendications précédentes, caractérisé en ce que la broche (16) s'étend plus avant horizontalement, en partant du profilé en caisson monobloc.

5. Support selon l'une des revendications précédentes, caractérisé en ce que les capteurs de vibration (14,15) sont équidistants par rapport à l'axe de symétrie, parallèle aux ailes, de la plaque d'âme (2).

6. Support selon l'une des revendications précédentes, caractérisé en ce que la plaque d'âme (2) présente des perçages (10) pour la liaison au carter ou fondation (13) d'une machine à équilibrer.

7. Support selon l'une des revendications précédentes 2 à 5, caractérisé en ce que, lorsque la broche (16) est horizontale, la plaque d'âme (2) est réalisée pour servir simultanément de carter à la machine à équilibrer ou vissée ou soudée à un carter de machine (13).

Fig. 1

Fig. 2